# EUROPEAN PATENT APPLICATION

(11) **EP 0 859 272 A1**
(43) Date of publication of application: **19.08.1998**
(21) Application number: 98300506.7
(22) Date of filing: 26.01.1998
(51) Int. Cl.: G03B 27/62, H04N 1/195, G03G 15/00

(54) **Document imaging device**

(30) Priority: 15.02.1997 GB 9703160
(71) Applicant: NCR INTERNATIONAL INC., Dayton, Ohio 45479 (US)
(72) Inventor: Mcnamara, Micheal R., Edinburgh EH15 2BD, Scotland (GB); England, Gary A., Edinburgh EH7 4NQ, Scotland (GB)
(74) Representative: Irish, Vivien Elizabeth

(57) **Abstract**

A document imager has a flat imaging surface (16) comprising an LCD matrix (42), and control means (52) to cause the parts of the matrix corresponding to a document placed on the surface (16) to be transparent, so that a camera (24) within the imager can record an image of the document through the LCD matrix.

Either the imaging surface (16) carries the outlines of a number of standard document sizes, or the LCD matrix is provided with a spaced array of permanently-transparent areas; the camera (24) detects which transparent area are covered by a document, and the control means (52) activates the LCD matrix (42) accordingly.

## Description

This invention relates to a document imaging device of the type provided in a document scanner, a fax machine or a photocopier.

Known devices comprise a flat sheet of glass on which the document is placed face down; an illumination source which is switched on during imaging; and a one-dimensional sensor array, typically a charge-coupled device (CCD) array, which is moved across the surface. As an alternative to a CCD array, a video camera with a "frame-grabber" may be used.

In such devices, a static graphic image is provided to show the fixed position at which a document to be scanned must be placed. There is also an external cover for the glass sheet to prevent escape of unpleasant or even harmful radiation from the illumination source during copying, and to provide a reflective and therefore white background for the scanned document.

It is the object of the inventor to provide a document imaging device which is more flexible in use than known devices.

According to the invention there is provided a document imaging device comprising a flat imaging surface; and below the flat surface a source of illumination and image recording means; characterized in that the flat imaging surface comprises a liquid crystal display (LCD) in matrix format, there being further provided control means to cause the parts of the matrix corresponding to a document to be scanned to be sufficiently transparent for the document image to be recorded through the LCD matrix.

The invention will now be described by way of example with reference to the accompanying drawings in which:-
Fig. 1 is an exploded view of a document scanner;
Fig. 2 is a cross section through an assembled scanner;
Fig. 3 illustrates in plan and elevation a part of the LCD array;
Fig. 4 illustrates a control system for a scanner; and
Fig. 5 illustrates a scanner operated by a swipe card

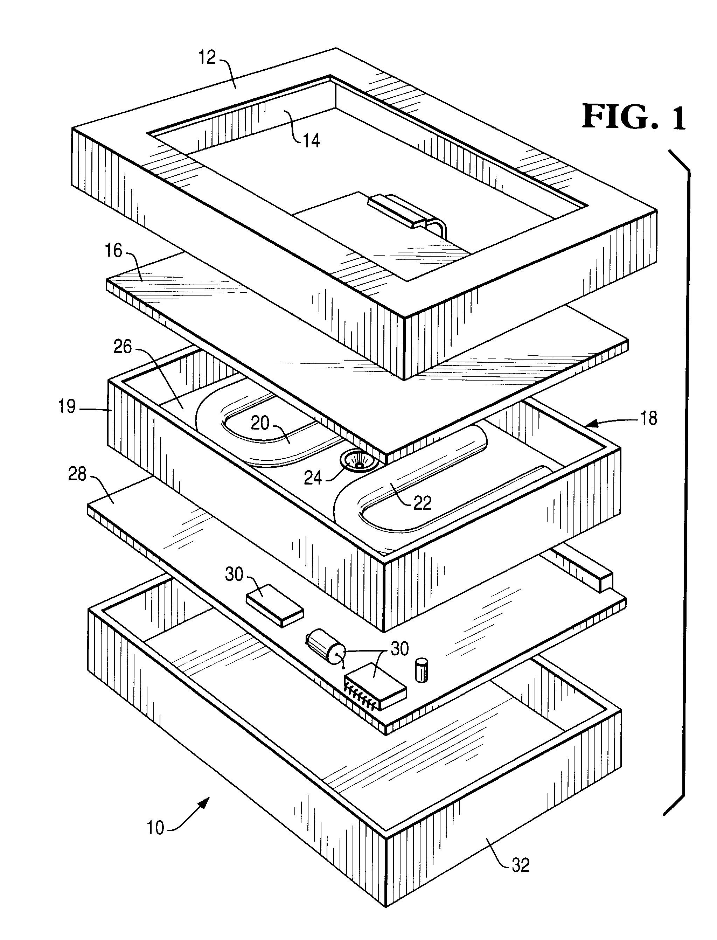

In figure 1, a document scanner 10 comprises a top cover 12 having a central oblong aperture 14. The cover 12 fits over a liquid crystal display and integrated touch screen in the form of a flat sheet 16; a large area of the sheet 16 is exposed through the aperture 14.

Below the sheet 16 is a reflector box 18 which contains two "U" shaped illuminating lamps 20, 22 lying parallel to the sheet 16, and spaced to provide even illumination across the surface of the sheet. Between the lamps there is a two-dimensional imaging device such as a CCD camera 24. The reflector box 18 has a light-tight floor 26.

Below the reflector box 18 there is a circuit board 28 supporting electrical components 30 forming a control circuit. A bottom cover 32 co-operates with the top cover 12 to provide a protective enclosure.

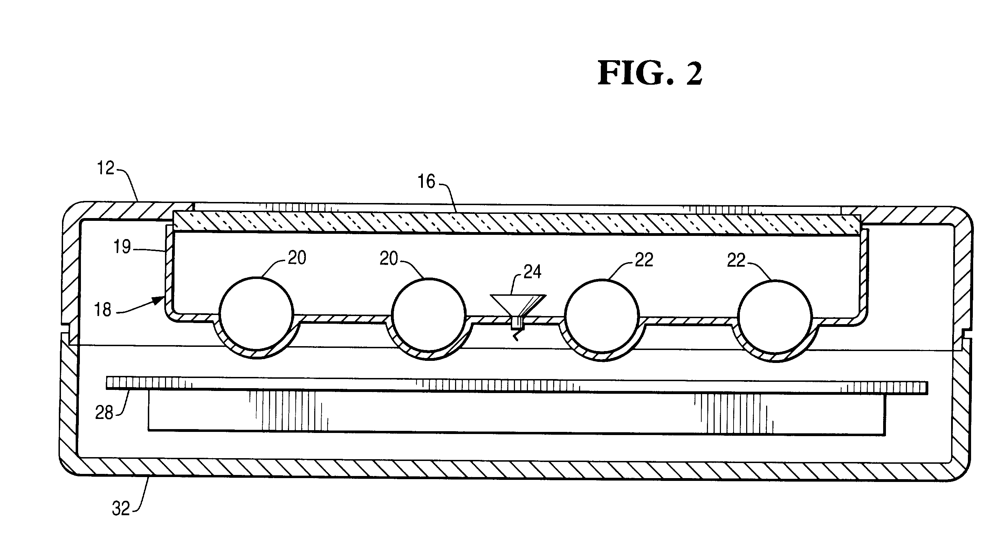

Figure 2 shows how the LCD sheet 16 is exposed in the aperture in the top cover 12, and shows the light-tight reflector box 18 surrounding the lamps 20, 22, and having upper edges 19 which enclose the outer edges of the sheet 16 to form a substantially light-tight seal.

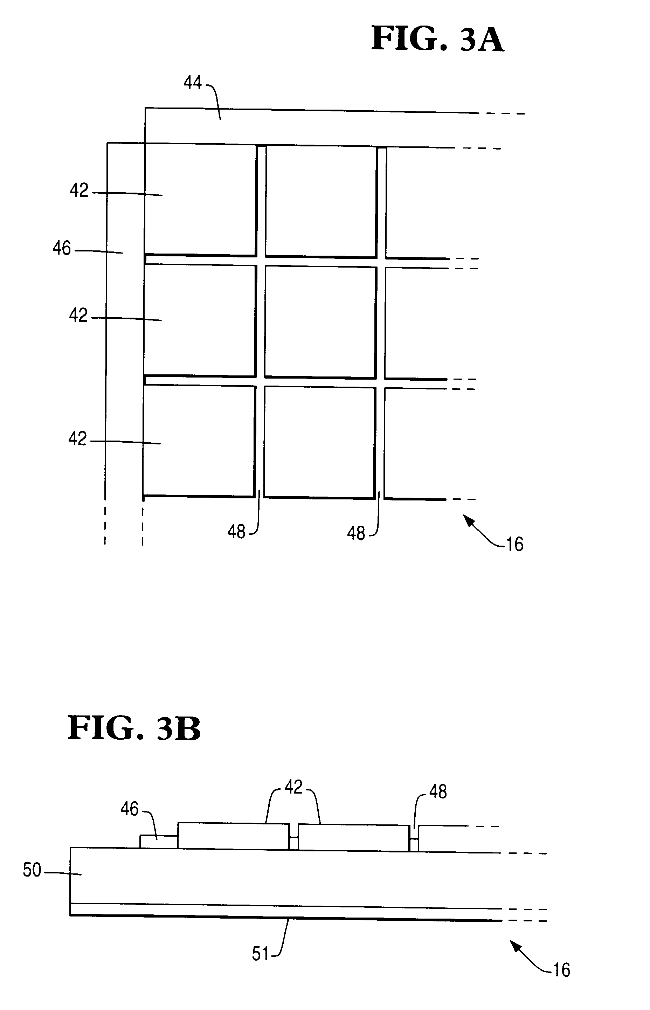

The construction of the LCD sheet is shown in more detail in the plan diagram, Figure 3a. The sheet 16 comprises a matrix of pixels 42 arranged in rows and columns, each pixel comprising a separate LCD cell. Along adjacent edges of the sheet 16 are connectors 44, 46 by which signals can be applied to selected pixels, in known manner, so as to render those pixels 42 transparent; such an arrangement is used in overhead projectors.

The elevation diagram of Fig. 3b shows the LCD pixels 42, supported on a glass sheet 50 and separated by narrow bands 48 of electrically conducting but non-LCD materials so that signals from the connectors 44, 46 can be applied to any pixel in the array. The underside of the glass layer carries an antireflective coating 51, to prevent an image of the lamps 20, 22, adversely affecting the image of an object to be scanned.

In operation, a document such as a cheque is placed in the aperture 14 (Figure 1) face down at a predetermined position (indicated e.g. by a rectangular static image) on the upper surface of the sheet 16. The connectors 44, 46 are operated to activate to a transparent or "white" state the pixels in the array of sheet 16 corresponding to the area of the cheque. The lamps 20, 22 are switched on, light passes upwards through the glass sheet 50 and transparent pixels 42, to be reflected by the data-bearing face of the cheque back towards the camera 24 which records an image of the cheque. Pixels outside the footprint of the cheque remain opaque, so no light, or substantially no light, passes upwards and a user is not exposed to harmful or uncomfortable radiation, and no mechanical cover is required. The LCD sheet 16 can be regarded as back-lit.

It will be understood by those skilled in the art that, to obtain an acceptable optical resolution, the pixels 42 must be tiny; for example, for a sheet 16 of area 8 inches x 6 inches, to provide a resolution of 200 dpi (dots per inch) an array of 1600 x 1200 (i.e. 1.92 million) pixels is required. It will also be understood by those skilled in the art that the sheet 16 can carry static outlines of other documents of standard size, and the connectors 44, 46 can be arranged to provide a signal so that pixels 42 corresponding to a selected outline are made transparent. Such an arrangement can be used with a small range of standard document sizes.

In an advantageous variation of the invention, greater positioning flexibility is provided. To determine the area, position and orientation on sheet 16 of the document to be scanned, a grid of small transparent areas is provided which are always transparent. Each area will be a small number of pixels in size, e.g. 3x3 or 1x1 pixels. The camera 24 is used to detect which parts of the grid are covered by the document (high degree of reflected light) or uncovered. The arrangement is similar to an automatic size detection device in a photocopier. The camera 24 provides a signal to a control circuit to cause the pixels 42 in the required area to be made transparent.

With such an arrangement, the pixels 42 made transparent in the LCD layer 16 can be made to match the document profile exactly, thus reducing and avoiding completely any black borders on the image of the document. The document scanner according to the invention can then be used for any size or shape of document, and the document can be placed in effect, anywhere on the scanning surface.

A further advantage is that there is no need to provide an opaque cover for the document-receiving surface; all light transmitted by the LCD layer is reflected by or absorbed by the document being scanned. No harmful or unpleasant radiation is transmitted.

A screen may however be needed to give physical protection to the upper surface of the CCD layer 16.

The CCD layer 16 is provided with an integral touch-screen facility by covering it with a layer of conventional touch-screen material. The information from the touch-screen interface can be used to provide static or animated graphic images, or still or motion video images, to give instructions to a user of the scanner to help the user place and orientate a document to be scanned. If the user performs an incorrect placement, the graphics can give instructions as to a correction; having a document at a known position and orientation simplifies the logic/software control required.

The touch-screen interface can also be provided with a data entry area to allow a user to enter relevant instructions, such as `Scan Now' or `Increase Brightness'.

In addition, the touch-screen can be used to enter numeric data, eg to correct any errors in the optical character reading process. Alternatively, the touch screen can be used to confirm the monetary amount, and the recipient, of a transaction.

Further advantages of an imaging device according to the invention are that the integrated form allows the size of the device to be reduced, i.e. the three components of a scanning/imaging surface, a display screen, and a data input keyboard are now all combined in the layer 16. This has the further advantage that the user interface does not have to move from a central panel to the imaging surface.

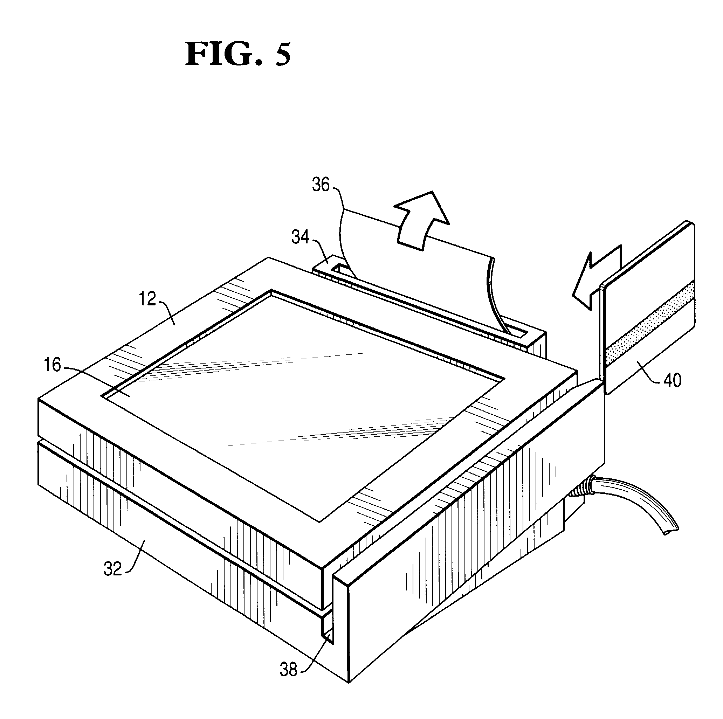

In Figure 5, the device shown in Figure 1 and 2 is provided with a copier 34 which supplies a copy 36 of a document placed on the LCD sheet 16. Optionally, the device also has a swipe slot 38 for a swipe card 40, to provide a card-operated document scanner.

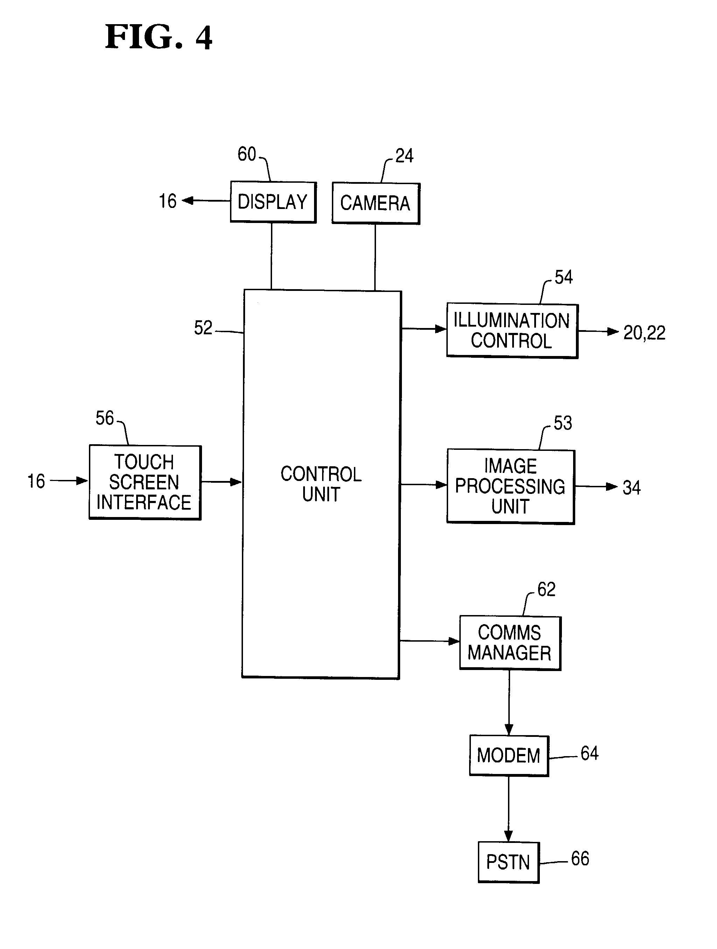

Figure 4 illustrates schematically a control arrangement. A control unit 52 controls the camera 24; an illumination control unit 54 connected to the lamps 20, 22; and a conventional image processing unit 53 connected to a copier 34. The control unit 52 receives signals from the CCD array 16 through a touch screen interface 56, and controls the pixels 42 which are made transparent through a display control unit 60.

To allow use for remote transactions, such as bill-paying or cheque-depositing, the unit 52 is connected through a communications manager 62 and a modem 64 to the public switched telephone network (PSTN)66.

A document imaging device according to the invention can be regarded as operating in three modes:-
1. Normal mode - the LCD sheet 16 operates to display the graphical output of the application software program loaded in the control unit 52. The touch-screen layer on sheet 16 will be active, waiting for user input; the camera 24 is inactive, and the illumination control unit 54 controls the lamps 20, 22 to provide a constant light intensity suitable for backlighting the sheet 16.
2. Position sensing mode - in this optional mode, a grid of transparent dots is superimposed on the graphical display of sheet 16, and the camera 24 takes an image of the underside of the sheet 16. The dots which are covered by a document appear light and those which are uncovered appear dark. This image of dark and light spots is processed by the image processing unit 53 to determine the position and orientation of the document; although some areas of the document will be dark, the assumption that the document is a rectangle allows its edges to be detected.
3. Scanning mode - the area of sheet 16 under the document to be scanned is made transparent and the camera 24 takes an image. The image processing unit 53 processes the image, emphasising fields of interest such as the account number and transaction amount of a cheque.

The device shown in Figure 5 can be used in a compact or inexpensive bill payment terminal. Users identify themselves by use of the swipe card 40, and then place a bill to be paid on the screen layer 16. The terminal reads the transaction information, and optionally prints a receipt for the user.

In a variation, instead of camera 24, a one-dimensional scanning array, mechanically scanned across the underside of the sheet 16 may be used; the scan thus takes place between the light source and the sheet to be scanned. Such an array would require illumination independent of the lamps 20, 22 used to backlight the LCD pixels 42, and would be visible to a user as a moving strip of light visible on the display.

## Claims

1. A document imaging device comprising a flat imaging surface (16); and below the flat surface a source of illumination (20, 22) and image recording means (24); characterized in that the flat imaging surface (16) comprises a liquid crystal display (LCD) in matrix format (42) there being further provided control means (52) to cause the parts of the matrix corresponding to a document to be scanned to be sufficiently transparent for the document image to be recorded by the recording means through the LCD matrix.

2. A device according to claim 1 characterized in that the LCD comprises a multiplicity of pixels (42).

3. A device according to claim 1 or claim 2 characterized in that the flat imaging surface is provided with outlines of documents of standard sizes, and the control means (52) controls the pixels (42) corresponding to one such outline to be transparent.

4. A device according to any preceding claim characterized in that the LCD in matrix format (42) is provided with a two-dimensional spaced array of permanently-transparent areas, and the image recording means (24) and control means (52) are arranged to sense which said areas are covered by a document, and to control the pixels (42) corresponding to said covered areas to be transparent.

5. A device according to claim 4 characterized in that the permanently-transparent areas each comprise a number of pixels less than 10.

6. A device according to any preceding claim characterized by further comprising image-processing means (53).

7. A device according to any preceding claim characterized in that the imaging surface (16) incorporates on its upper surface a touch-screen layer.

8. A device according to any preceding claim characterized by further comprising copier means (34) to supply a copy of a document placed on the imaging surface (16).
